# EUROPEAN PATENT APPLICATION

(11) **EP 2 813 799 A1**
(43) Date of publication of application: **17.12.2014**
(21) Application number: 13853873.1
(22) Date of filing: 07.11.2013
(51) Int. Cl.: G01B 5/08, F25B 41/00

(54) **SYSTEM AND METHOD FOR DIMENSIONAL CONTROL OF CONNECTOR TUBES**

(30) Priority: 12.11.2012 BR 102012028900
(71) Applicant: Whirlpool S.A., São Paulo - SP 04578-000 (BR)
(72) Inventor: FISCHER, Roberto, 89204-643 Joinville - SC Brazil (BR); CARDOSO, Marcio Evandro, 89211-610 Joinville - SC (BR); MENDES, João Manoel, 89220-020 Joinville - SC (BR)
(74) Representative: Soldatini, Andrea
(86) International application number: PCT/BR2013/000477
(87) International publication number: WO 2014/071487

(57) **Abstract**

The present invention refers to a dimensional control system for mechanical formed tubes, more particularly for connecting tubes also known as passing tubes mainly intended to be used in compressors, wherein it comprises: at least one bipartite cavity (5) defined by at least one moving part (51), said bipartite cavity (5) cooperating with a connecting tube (1), wherein the inner diameter of said bipartite cavity (5) corresponds to the outer diameter of a flange region (3) of said connecting tube (1); at least one actuator (6) cooperating with said at least one moving part (51) of said at least one bipartite cavity (5); at least one sensor (7) cooperating with said at least one bipartite cavity (5), and at least one measurement device (8) cooperating with said at least one sensor (7).

## Description

### Field of the Invention

The present invention refers to a dimensional control system for mechanically formed tubes, more specifically connecting tubes (also known as passing tubes) mainly intended to be used in compressors, wherein said systems more particularly aims at carrying out an automated measurement of the flange diameter of said passing tubes to predict automatic discard of parts which do not meet the pre-established standards and thereby to provide more accuracy and agility to the production process.

### Background of the Invention

It is known from the art that compressors are equipments used in refrigeration systems generally for circulation of refrigerant through refrigeration system pipe, which couples with the compressors by means of suction and discharge connecting tubes (or passing tubes).

Such connecting tubes are usually made of copper and are highly important elements because in addition to allowing for connection of a system tube to the compressor inner region they are also responsible for ensuring a suitable sealing of an installation, which directly interferes in the performance thereof. To this effect, the method of producing said connecting tubes comprises forming copper cylindrical tubes in sections having specific diameters and a flange segment, which, in order to permit perfect sealing of the compressor, should have diameter within a specific range of values varying according to compressor capacity.

It occurs that devices and/or systems specifically intended to carry out this step of dimensionally controlling connecting tubes to be used in hermetic compressors are not presently known and therefore such procedure has been made manually by an operator specific for this function. Such fact causes a significant increase in production time and costs or, in some cases it happens that such checking is only made by sampling which results in an elevated risk that off-specification formed parts are unduly sent for use.

Therefore, it is observed that the present state of the art lacks solutions that:
- would allow for automation of dimensional control of flange regions of connecting tubes for compressors;
- could be used with known equipments and or already under operation to form connecting tubes; or
- could be integrated to new equipments for production of connecting tubes mainly intended for use in hermetic compressors.

### Objects of the Invention

Therefore, one of the objects of the present invention is to provide a system to automatically effect dimensional control of a specific portion - particularly of a flange diameter - of connecting tubes mainly intended to be used in hermetic compressors.

Yet one object of the present invention is to provide an automatic system for dimensional checking which may operate in conjunction or integrated to equipments to form connecting tubes for hermetic compressors.

Another object of the present invention is to provide a dimensional control system which allows for dimensional checking the totality of produced connecting tubes, thus eliminating the possibilities of using parts which do not meet the standards required for safe and efficient operation of equipments with which they will be used; in this case hermetic compressors.

Consequently, a further object of the present invention is to provide a dimensional control system which due to its automation eliminates manual checking which would cause operator workforce waste, in addition to increasing agility and rapidity in the production process.

Still another object of the present invention is to provide a dimensional control method for mechanically formed tubes which may confer to this production process more automation, accuracy, agility and quality.

### Summary of the Invention

The objects above are achieved by means of a dimensional control system for connecting tubes, which are defined by substantially cylindrical bodies provided with a flange region, characterized in that said dimensional control system comprises:
- at least one bipartite cavity defined by at least a moving part, said bipartite cavity cooperating with the connecting tube, wherein the inner diameter of the bipartite cavity corresponds to the outer diameter of the connecting tube flange region;
- at least one cooperating actuator having at least one moving part of at least a bipartite cavity;
- at least one sensor cooperating with at least a bipartite cavity; and
- at least one measuring device cooperating with said at least one sensor.

Furthermore, said dimensional control system further comprises means to determine the discharge of connecting tubes produced with a flange region having a diameter out of the predetermined dimensions.

According to a preferred embodiment of the invention, said at least one moving part cooperating with at least an actuator that effects horizontal, vertical, or rotational movement to close the bipartite cavity when reading is being conducted.

The objects proposed by the present invention comprise a dimensional control method for connecting tubes defined by substantially cylindrical bodies provided with a flange region, said method comprises the following steps of:
- transferring the connecting tube to a dimensional control system by means of a system of claws or other similar device;
- coupling the connecting tube with a bipartite cavity defined by at least one moving part, said bipartite cavity cooperating with the flange region of the connecting tube;
- driving an actuator cooperating with said at least one moving part of said at least one bipartite cavity until same closes;
- reading, by means of at least one sensor, potentiometric pen or potentiometric rule, data relative to a diameter resulting from the closing of the bipartite cavity;
- receiving by means of a measurement device data emitted by the sensor;
- comparing, by means of the measurement device, date emitted by the sensor to data of the variation limits programmed in the measurement device for the connecting tube;
- in the case that the measurement identifies that the flange diameter of the connecting tube is not within the accepted limits, an electronic, visual and/or sonorous signal will be emitted, and then there will be driven the actuator cooperating with said at least one moving part of the at least one bipartite cavity until same opens such that another actuator acts to remove the connecting tube which does not meet the standard requirements;
- in the case that the measurement result is within the accepted dimensional limits, there will be driven the actuator cooperating with the at least one moving part of the at least one bipartite cavity until same opens, and the connecting tube will fall over a mat or trough to be transported to the next step of the production process or to a container for storage and transportation;
- returning the system to the initial position to start a new measurement procedure.

### Brief Description of the Drawings

The present invention will be described in detail based on the drawings, wherein:
Figs. 1.1 and 1.2 are elevation views of two possible embodiments for already formed connecting tubes, comprising a flange region which will be the main object of the system of the present invention;
Fig. 2 is a perspective view of the dimensional control system for mechanically formed tubes made in accordance with a preferred embodiment of the present invention;
Fig. 3 is a perspective view of a generic equipment of forming connecting tubes in which the system illustrated in Fig. 2 is duly integrated to the production process.

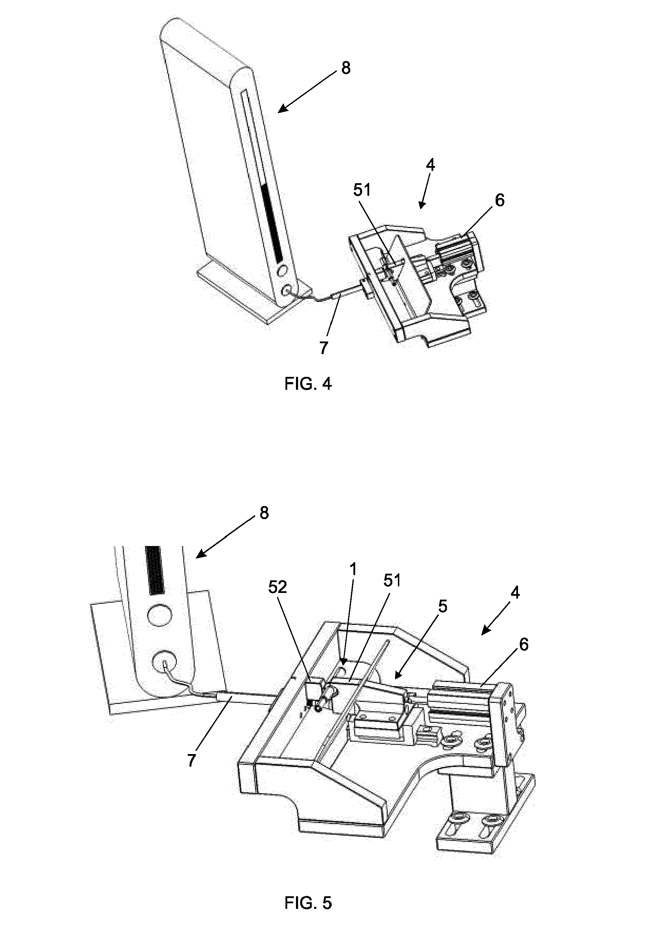

Fig. 4 is a perspective view of a system illustrated in Fig. 2 duly connected to the measurement device; and
Fig. 5 is an amplified detail of the interconnection between the system of Fig. 2 and the measurement device illustrated in Fig. 4, thus providing for a detailed visualization of a sensor responsible for emitting data from the readings performed.

### Detailed Description of the Invention

The invention will be described in detail based on the attached drawings, to which reference numerals will be given to facilitate their comprehension.

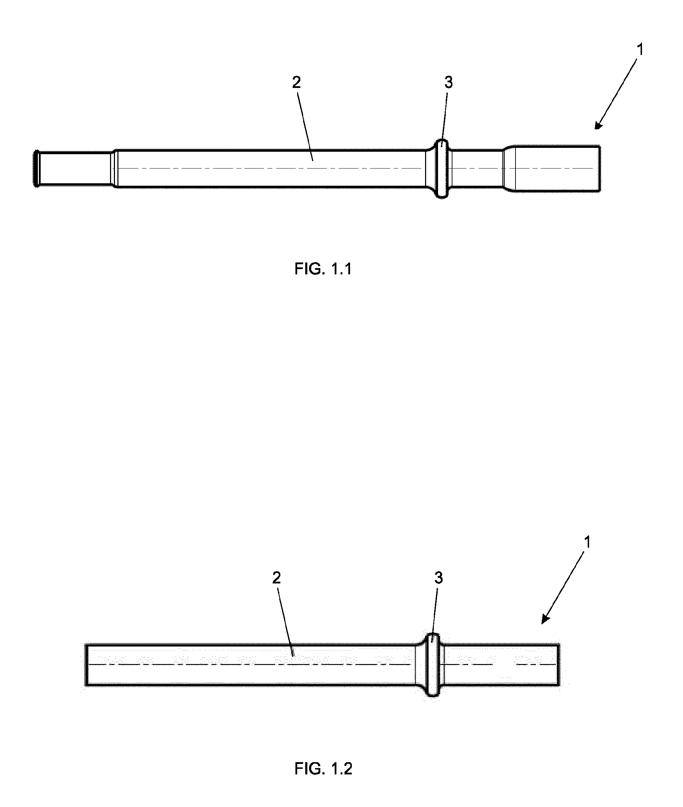

The dimensional control system of the present invention is intended to dimensionally evaluate a determined region of a mechanically formed tube. More specifically, said system carries out the measurement of connecting tubes 1 defined by substantially cylindrical bodies 2 provided with a flange region 3, as can be seen from Fig. 1 wherein the region to be measured will be the flange region 3 of the connecting tube 1, which will correspond to the closing diameter of the bipartite cavity 5 since this element will aid in appropriately sealing a refrigeration system.

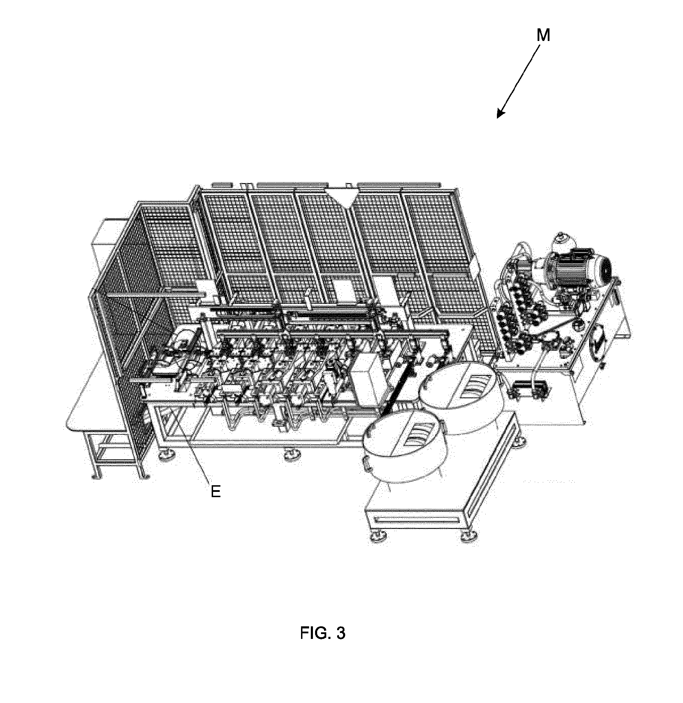

It is important to clarify that after the steps of producing the formed connecting tube 1, measurement is carried out by said system that can be jointly or removably coupled to an M-forming machine as illustrated in Fig.3.

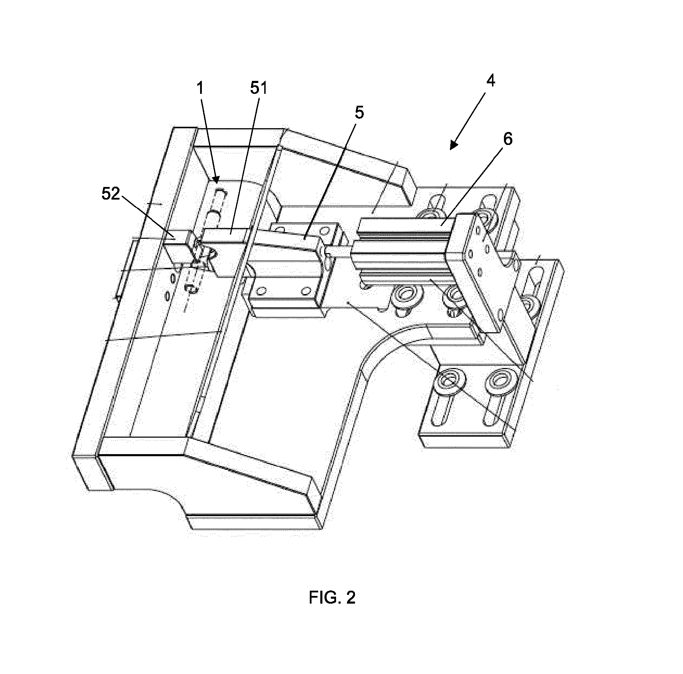

In the preferred embodiment of the invention illustrated in Fig. 2, it is possible to observe that said dimensional control system 4 comprises a bipartite cavity 5 preferably defined by a moving part 51 and by a fixed part 52, wherein said bipartite cavity 5 - specifically its moving part 51 - cooperating with an actuator 6 with actuation axis coincident with the displacement axis of said moving part 51. It should be pointed out that the functioning system of the actuator 6 can be electronic, pneumatic, hydraulic, mechanical or driven by another system, and the movement of said moving part of the bipartite cavity 5 can be in horizontal, rotational or angulated direction without, however, departing from the presently claimed scope of protection.

The system of the present invention further comprises sensors 7 cooperating with the bipartite cavity 5, and a measurement device 8 cooperating with said sensors 7.

It is worth to mention that the formed connecting tube 1 is transferred to the inside of the bipartite cavity 5 using a system of claws or other similar means such that same is positioned with the flange region 3 coincident with the inner diameter of said bipartite cavity 5. When being positioned, the actuator 6 is driven which causes the bipartite cavity 5 to close.

After closing, said sensor 7, or potentiometric rule, or also potentiometric pen, which can be disposed at any place that permits to read the closing diameter of the bipartite cavity 5, sends the read data to a measurement device 8 that in the preferred embodiment of the invention is a measurement column programmed with variation limits acceptable for flange region 3. In the case that the measurement detects that the diameter of flange 3 of the connecting tube 1 is not within the accepted limits, an electronic, visual and/or sonorous signal will be emitted, and the connecting tube 1 will be automatically segregated from the other produced parts. Thus, in a totally computerized mode and without requiring an operator, only those tubes whose dimensional features are accepted to impart good sealing conditions and performance to hermetic compressors are sent to the next production step.

In this sense, it is worth to mention that the mode of segregating the equipment can be defined by several manners such as, for example, simply releasing the tube to the lower surface of the system so that same is directed to a collecting container, or by a specific plan designed to the system of claws.

Hence, in addition to being conducted in a totally computerized way, a dimensional control of the flange region 3, the disclosed dimensional control system 4 further comprises means to determine the discharge of connecting tubes 1 produced with incompatibly acceptable dimensional parameters, that is, not within the predetermined dimensions.

The dimensional control method for connecting tubes 1, in accordance with the present invention, comprises, therefore, the following steps of:
- transferring the connecting tube 1 to a dimensional control system 4 by means of a system of claws or other similar device;
- coupling said connecting tube 1 to a bipartite cavity 5 defined by the at least one moving part 51, wherein said bipartite cavity 5 is cooperating with the flange region 3 of the connecting tube 1;
- driving an actuator 6 cooperating with the at least one moving part 51 of the at least one bipartite cavity 5 until same closes;
- reading by means of at least one sensor 7 data relative to the diameter resulting from the closing of the bipartite cavity 5;
- receiving, by means of a measurement device 8, data emitted by said sensor 7;
- comparing, by means of a measurement device 8, data emitted by said sensor 7 to the data of the acceptable variation limits programmed in said measurement device 8 for the tube connecting tube 1;
- in the case that the measurement detects that the diameter of flange 3 of the connecting tube 1 does not fall within the accepted limits, an electronic, visual and/or sonorous signal will be emitted and then the actuator 6 cooperating with said at least one moving part 51 of the at least one bipartite cavity 5 is driven until same opens such that the other cylinder acts to remove the connecting tube 1 which does not meet the required standards, preferably said connecting tube 1 falls over mat E and the other actuator displaces the flawed tube to a discharge compartment.
- in the case that the measurement result is within the accepted dimensional limits, the actuator 6 cooperating with said at least one moving part of said at least one bipartite cavity is driven until same opens and the connecting tube 1 falls over a met to be transported to the next step of the production process or into a storage and transport container, as necessary.
- returning the system to the initial position to eventually start a new measurement procedure.

It should be emphasized that although the preferred embodiments of the present invention have been shown, it is understood that eventual omissions, substitutions, electric pole inversion, and construction modifications can be made by a person skilled in the art without departing from the spirit and claimed scope of protection. It is also expressly predicted that all combinations of elements that perform the same function substantially in the same form to achieve the same results are within the scope of the invention. Substitution of elements of a described embodiment by others are also fully intended and contemplated.

However, attention should be drawn to the fact that the given description based on the figures above only refers to some possible embodiments for the system of the present invention, wherein the real scope is, therefore, provided by the appended claims.

## Claims

1. Dimensional control system for connecting tubes, wherein said connecting tubes 1 are defined by substantially cylindrical bodies 2 provided with a flange region 3, **CHARACTERIZED in that** said dimensional control system comprises:
- at least one bipartite cavity 5 defined by at least one moving part 51, said bipartite cavity 5 cooperating with the connecting tube, wherein the inner diameter of the bipartite cavity 5 corresponds to the outer diameter of the flange region 3 of the connecting tube;
- at least one actuator 6 cooperating with at least one moving part 51 of said at least one bipartite cavity 5;
- at least one sensor cooperating with said at least one bipartite cavity; and
- at least one measuring device 8 cooperating with said at least one sensor 7;
wherein said dimensional control system 4 further comprises means to determine discharge of the connecting tubes 1 produced with the flange region 3 having its diameter outside the predetermined dimensions.

2. System, in accordance with claim 1, **CHARACTERIZED in that** said at least one moving part 51 cooperating with said at least one actuator 6 effects at least one of the following movements: horizontal, vertical and rotational.

3. Dimensional control method for connecting tubes 1 defined by substantially cylindrical bodies 2 provided with a flange region 3, **CHARACTERIZED in that** said dimensional control method comprises the following steps of:
- transferring the connecting tube 1 to a dimensional control system 4 by means of a system of claws or another similar device;
- coupling the connecting tube 1 to a bipartite cavity 5 defined by at least one moving part 51.said bipartite cavity cooperating with the flange region 3 of said connecting tube 1;
- driving an actuator 6 cooperating with said at least one moving part 51 of said at least one bipartite cavity 5 until same closes;
- reading, by means of a sensor 7, data relative to the diameter resulting from the closing of said bipartite cavity 5;
- receiving, by means of a measurement device 8, data emitted by said sensor 7;
- comparing, by means of said measuring device 8, data emitted by the sensor 7 to data of the accepted variation limits programmed in the measurement device 8 for the connecting tube 1;
- in the case that the measurement detects that the diameter of flange 3 of the connecting tube 1 does not fall within the accepted limits, an electronic, visual and/or sonorous signal will be emitted and then the actuator 6 cooperating with said at least one moving part 51 of the at least one bipartite cavity 5 is driven until same opens such that the other cylinder acts to remove a connecting tube 1 which does not meet the required standards; preferably said connecting tube 1 falls over a mat and the other actuator displaces the flawed tube to a discharge compartment.
- in the case that the measurement result is within the accepted dimensional limits, the actuator 6 cooperating with said at least one moving part of said at least one bipartite cavity is driven until same opens and the connecting tube 1 falls over a mat to be transported to the next step of the production process or into a storage and transport container, as necessary.
- returning the system to the initial position to eventually start a new measurement procedure.
